# EUROPÄISCHE PATENTSCHRIFT

(11) **EP 1 257 450 B1**
(45) Veröffentlichungstag und Bekanntmachung des Hinweises auf die Patenterteilung: **29.06.2005**
(21) Anmeldenummer: 01911667.2
(22) Anmeldetag: 22.02.2001
(51) Int. Cl.: B60S 9/04

(54) **STÜTZEINRICHTUNG FÜR FAHRZEUGE**
SUPPORTING DEVICE FOR VEHICLES
DISPOSITIF D'APPUI POUR VEHICULES

(30) Priorität: 22.02.2000 DE 20003180 U
(43) Veröffentlichungstag der Anmeldung: 20.11.2002
(73) Patentinhaber: AL-KO KOBER AG, D-89359 Kötz (DE); Hinrichs Electronic GmbH, 96450 Coburg (DE)
(72) Erfinder: BECK, Gerhard, 89343 Jettingen-Scheppach (DE); HARTUNG, Rudolf, 96253 Untersiemau (DE)
(74) Vertreter: Ernicke, Hans-Dieter, Dipl.-Ing.
(86) Internationale Anmeldenummer: PCT/EP2001/001911
(87) Internationale Veröffentlichungsnummer: WO 2001/062563

(56) Entgegenhaltungen:
- DE-A- 19 756 426
- DE-U- 8 623 100
- DE-U- 29 815 373
- GB-A- 2 247 665
- US-A- 4 103 869
- US-A- 5 829 557

## Beschreibung

Die Erfindung betrifft eine Stützeinrichtung für Fahrzeuge, insbesondere für Fahrzeuganhänger, mit den Merkmalen im Oberbegriff des Hauptanspruches.

Eine solche Stützeinrichtung für Fahrzeuganhänger ist aus der US-A-4,103,869 bekannt. Die Stützeinrichtung umfasst vier bewegliche Stützen, die jeweils mit einem Spindeltrieb und einem elektrischen Getriebemotor ausgerüstet sind. Die Getriebemotoren können zum motorischen Heben und Senken der Stützen wahlweise manuell über einen Drehschalter oder automatisch über ein Nivelliersystem gesteuert werden. Außerdem ist ein Handbetrieb der Stützen mittels einer Handkurbel oder dgl. möglich. Beim Handbetrieb ist der Elektromotor abgeschaltet, d.h. er wird nicht mit Antriebsstrom beaufschlagt und dreht nicht in einer aktiven Antriebsbewegung. Für den Handbetrieb d.h. für die manuelle Betätigung der Stütze besitzt die nach hinten über das Stützengehäuse verlängerte Spindel einen vorstehenden Kurbelzapfen mit einem Sechskant-Querschnitt zum Anschluss der Handkurbel. Der Motor ist über das Getriebe direkt mit der Spindel und dem rückwärtigen Kurbelzapfen verbunden. Durch diese direkte und nicht lösbare Verbindung müssen beim manuellen Kurbelbetrieb das Getriebe und der Elektromotor mitbewegt werden. Die Kurbel muss gegen den Widerstand von Getriebe und Motor gedreht werden, was einen erhöhten Kraftaufwand bedeutet. Dies ist ergonomisch ungünstig.

Eine andere Stützeinrichtung ist aus der DE-U-298 15 373 bekannt. Sie besteht aus mehreren am Fahrzeugboden montierten beweglichen Stützen, die mit einem elektromotorischen Stützenantrieb ausgerüstet sind. Der Stützenantrieb ist mit Abstand hinter der Stütze angeordnet. Er ist dadurch nur schwer für Montage und Wartung zugänglich. Er braucht zusätzlichen Bauraum und eigene zusätzliche Befestigungsmöglichkeiten am Fahrzeug, die häufig nicht zur Verfügung stehen. Die vorbekannte Stützeinrichtung hat ferner das Problem, dass sie bei Ausfall der Energieversorgung nur sehr umständlich einen Handbetrieb zulässt, weil der motorische Antrieb im angesteckten Zustand mitgedreht oder demontiert werden muss. Dies schränkt andererseits die Auslegung und Übersetzung des elektromotorischen Stützenantriebs ein.

Eine ähnliche Stützeinrichtung mit den gleichen Problemen ist auch aus der DE-A-197 56 426 bekannt.

Die GB-A-2,247,665 befasst sich mit einer anderen Stützeinrichtung für Fahrzeuganhänger. Die Stütze wird hier nur von Hand mittels einer Kurbel bewegt. Die Stützeinrichtung hat eine Schnellausrück-Mechanik, mit der beim Einfahren der Stütze die Spindel von der mit der Stütze verbundenen Spindelmutter entkoppelt werden kann. Hierdurch kann die Stütze bei Entlastung leichter und schneller nach oben geschwenkt werden, wobei die Spindelmutter ohne Eingriff an der Spindel entlang gleitet.

Die DE-U-86 23 100 offenbart einen Wagenheber, der mit einem elektromechanischen Antrieb ausgerüstet ist. Der Wagenheber ist nur für eine motorische Betätigung konstruiert und bietet keine Möglichkeit für einen manuellen Betrieb mittels Handkurbel oder dergleichen.

Es ist Aufgabe der vorliegenden Erfindung, die Stützeinrichtung mit Hinblick auf den Handbetrieb zu verbessern.

Die Erfindung löst diese Aufgabe mit den Merkmalen im Hauptanspruch.
Die Stützeinrichtung hat den Vorteil, dass sie sich ohne großen Aufwand auf den Handbetrieb mit einer Handkurbel umstellen lässt. Sie erfordert im Handbetrieb auch nur geringe Handkräfte und kann eine günstige Übersetzung bieten.

Die Einrichtung zur Abkopplung oder zur Umkehr der motorischen Antriebsverbindung bei abgeschaltetem Antriebsmotor kann unterschiedlich ausgebildet sein. Im einen Fall kann die Abkopplung z.B. durch eine geeignete Unterbrechung des Antriebsstrangs, z.B. eine ausrückbare Getriebestufe, erreicht werden. Hierdurch können die Handkräfte klein gehalten werden, wobei trotzdem der motorische Antrieb ein hochuntersetzendes Getriebe und einen relativ drehmomentschwachen Motor haben kann. Durch die Abkopplung wird die hohe Eigenhemmung des Getriebes überbrückt.

Vorzugsweise wird eine mechanische Einrichtung zur Umkehr der motorischen Antriebsverbindung eingesetzt. Sie ist besonders einfach zu bedienen und erfordert einen geringen Bau- und Platzaufwand. Die Umstellung erfolgt über eine abschaltbare Motorabstützung, die im Motorbetrieb gesperrt ist und die dann das Motormoment wirksam abstützt. Für den Handbetrieb kann die Motorabstützung freigegeben werden, wodurch der Motor mitbewegt werden kann. Die abschaltbare Motorabstützung hat hierbei auch den Vorteil, dass die für den Handbetrieb erforderlichen Handkräfte gering sind und sich in der Größenordnung von normalen rein manuell betätigten Stützen bewegen. Ferner kann durch die abschaltbare Motorabstützung der motorische Antrieb an der Stütze während des Handbetriebes verbleiben.

Es ist ferner möglich, den motorischen Stützenantrieb in die Stütze innenliegend zu integrieren. Er braucht dadurch nicht mehr Platz als eine normale handbetätigte Stütze und hat auch keine Montage- und Abstützprobleme. Der Bau- und Montageaufwand ist gering. Andererseits bietet die Stützeinrichtung einen hohen Bedienungskomfort.

Die Stützeinrichtung kann eine geeignete Steuerung zur automatischen Niveauregulierung und gegebenenfalls auch eine Fernsteuerung haben. Über Anzeigen oder Warneinrichtungen an der Steuerung und/oder der Fernbedienung können die Schräglage des Fahrzeugs oder auch der Erfolg oder Misserfolg der automatischen Niveauregulierung signalisiert werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf einen Fahrzeuganhänger mit einer Stützeinrichtung mit vier motor- und handbetriebenen Stützen,
- Figur 2:: eine Unteransicht der Stütze mit Stützenantrieb,
- Figur 3:: eine geklappte Seitenansicht der Anordnung von Figur 2,
- Figur 4:: eine vergrößerte und abgebrochene Seitenansicht des Stützenantriebs mit der abschaltbaren Motorabstützung,
- Figur 5 und 6:: die abschaltbare Motorabstützung in zwei verschiedenen Betriebsstellungen und
- Figur 7:: einen Längsschnitt durch den Stützenantrieb.

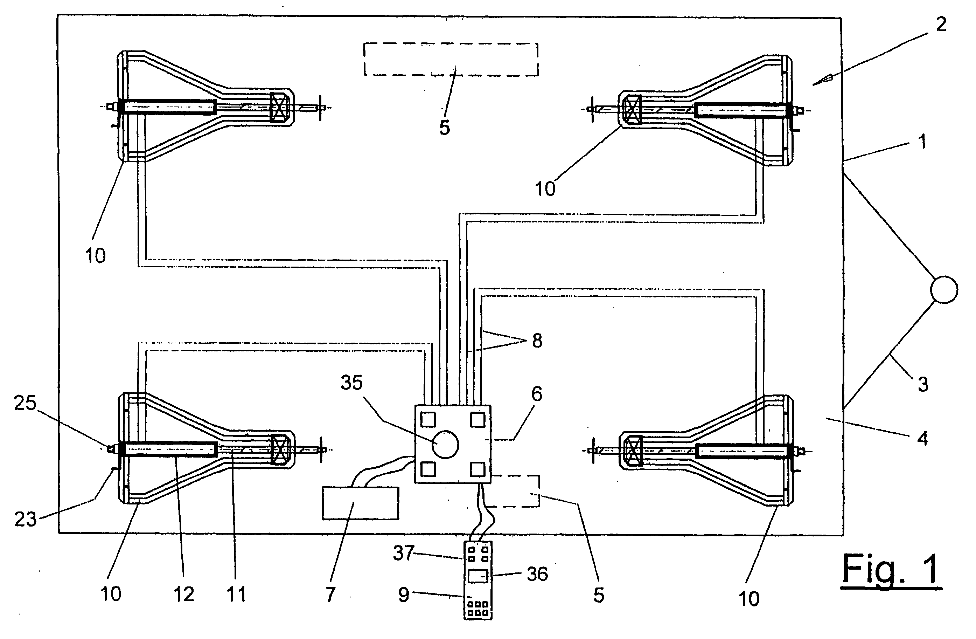

Figur 1 zeigt in einer schematischen Draufsicht ein Fahrzeug (1) mit einer Stützeinrichtung (2). Das Fahrzeug (1) ist hier als Fahrzeuganhänger ausgebildet, der mit einer starren V-Deichsel (3) und einem Boden (4) sowie einer oder zwei Achsen mit Rädern (5) ausgerüstet ist.

Vorzugsweise handelt es sich um einen Wohnwagenanhänger oder Caravan. Alternativ kann das Fahrzeug (1) auch in beliebig anderer Weise, z.B. als Kraftfahrzeug, speziell als Wohnmobil oder dergleichen ausgebildet sein.

Die Stützeinrichtung (2) besteht im gezeigten Ausführungsbeispiel aus vier einzelnen Stützen (10) mit jeweils einem motorischen Stützenantrieb (12), die gleichmäßig verteilt an den Ecken des Fahrzeugs (1) angeordnet und hierbei an der Unterseite des Bodens (4) montiert sind. Die Stützenantriebe (12) sind vorzugsweise als elektromotorische Spindelantriebe ausgebildet und über Leitungen (8) mit einer gemeinsamen Steuerung (6) sowie einer Energieversorgung verbunden. An die Steuerung (6) ist eine vorzugsweise gemeinsame Energieversorgung (7), z.B. eine wiederaufladbare Batterie, und eine Steuereinheit (9), z.B. eine Fernbedienung angeschlossen. In die Steuerung (6) ist mindestens eine elektronische Wasserwaage (35) integriert, über die Schräglagen des Bodens (4) festgestellt und mittels der Stützen (10) ausgeglichen werden können.

Die Stützeinrichtung (2) ist in der gezeigten Ausführungsform als Nivelliereinrichtung ausgebildet, mit der über die vier Stützen (10) und ihre Stützantriebe (12) das Fahrzeug (1) horizontal ausgerichtet und ins Wasser gestellt werden können. Diese Ausrichtung kann einerseits von Hand oder auch vollautomatisch über die vorgenannten integrierten Wasserwaagen (35) erfolgen. Die Fernbedienung (9) kann über Kabel oder über eine drahtlose Signalübertragung mit der Steuerung (6) verbunden sein.

An der Fernbedienung (9) ist ein Bedienfeld vorhanden, mit dem die Stützenantriebe (12) einzeln gesteuert werden können. Außerdem sind ein Schalter für die Umstellung zwischen manueller und automatischer Niveauregulierung, ein Ein- und Ausschalter und dergleichen weitere Bedienelemente vorhanden. Die Fernbedienung (9) hat auch eine Anzeige (36), an der die von der Wasserwaage (35) gemeldete Schrägstellung des Fahrzeugs (1) nach ein oder mehreren Richtungen angezeigt wird. Hierbei kann insbesondere die Schrägstellung der Einzel- oder Tandemachse signalisiert werden. Die Signalisierung erfolgt durch eine Winkelangabe oder durch Anzeige einer Höhendifferenz zwischen den Rädern (5) bzw. den Stutzen (10) der linken und rechten Fahrzeugseite. Hierbei kann auch die Höhe oder der erforderliche Ausfahrweg jeder einzelnen Stütze (10) angezeigt werden. Die entsprechenden Berechnungen werden in der Steuerung (6) über eine entsprechende Recheneinheit durchgeführt. Aus den Angaben kann der Bediener auch ersehen, ob er eine Niveauregulierung und horizontale Ausrichtung des Fahrzeugs (1) nur mit den Stützen (10) erreichen kann oder ob zusätzliche Stützkörper untergelegt werden müssen.

Alternativ oder zusätzlich zur Anzeige (36) kann auch eine Warneinrichtung (37) vorhanden sein, die den Bediener über eine korrekte Funktion oder eine Fehlfunktion der einzelnen Stützen (10) und ihrer Stützenantriebe (12) informiert. Dies können z. B. LED-Anzeigen für jeden Stützenantrieb (12) sein, die leuchten, wenn er in Betrieb ist und die Spindel (11) bewegt. Über eine andere Anzeigeart, z. B. ein Blinken, kann außerdem das Erreichen bzw. Verlassen des Bodenkontaktes der einzelnen Stützen (10) signalisiert werden. Dies lässt sich in der Steuerung (6) über eine Änderung der Stromaufnahme der Elektromotoren (13) feststellen und auswerten. Hierbei kann auch eine Umschaltung und Änderung der Betriebsspannung für die einzelnen Motoren (13) vorgenommen werden, damit diese bei Bodenkontakt und der zum Anheben des Fahrzeugs (1) dann erforderlichen höheren Kraft entsprechend mehr Spannung erhalten. Je nach Antrieb kann auch das Kennlinienverhalten umgeschaltet werden.

Zudem kann die Warneinrichtung (37) am Ende eines vollautomatischen oder manuellen Nivelliervorganges den Erfolg oder Misserfolg signalisieren. Wenn das Fahrzeug (1) dann nicht in der Horizontalen steht, wird ein entsprechendes Warnsignal ausgegeben, was z. B. über einen entsprechenden Blickrhythmus der LED's oder über eine zusätzliche akustische Warnung durch einen Summer oder dergleichen geschehen kann. Hierbei kann außerdem stützenspezifisch der Niveaufehler angezeigt werden. Statt der üblicherweise gewünschten Horizontallage kann bei der Niveauregulierung auch eine beliebige andere Fahrzeuglage gewählt und eingestellt werden.

In einer einfacheren Ausführungsform können die Stützenantriebe (12) jeweils einzeln angesteuert und betätigt werden und sind jeweils auch mit einer eigenen Energieversorgung (7) ausgerüstet. Die gemeinsame Steuerung (6) kann dann entfallen. Je nach Fahrzeuggröße und Einsatzzweck kann die Stützeinrichtung (2) auch eine andere Zahl von Stützen (10) und Stützenantrieben (12) aufweisen.

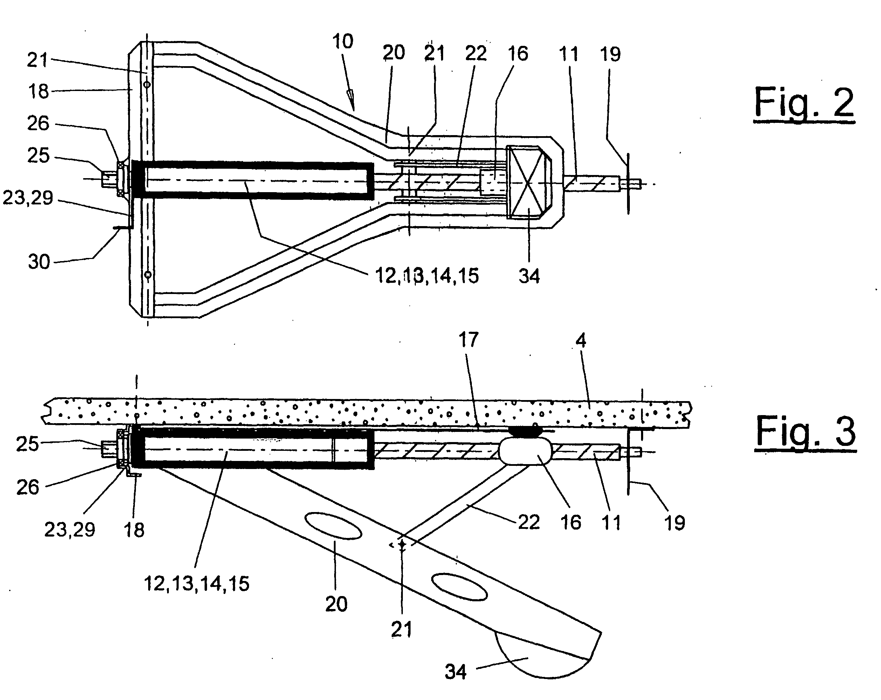

Figur 2 bis 7 zeigen eine Stütze (10) mit ihrem Stützenantrieb (12) in verschiedenen Ansichten und Detaildarstellungen.

Die einzelne Stütze (10) kann in beliebig geeigneter Weise ausgebildet sein. Im gezeigten Ausführungsbeispiel besteht sie aus einem Stützengestell (18), das an der Unterseite des Bodens (4) mit Schrauben oder dergleichen befestigt werden kann. Das Stützengestell (18) ist ein abgekantetes Metallprofil mit geeigneten Montage- und Stützflanschen.

Am Stützengestell (18) ist ein Stützfuß (20) über ein Lager (21) mit bodenparalleler Drehachse schwenkbar gelagert. Der aus einem Profilblech gebildete Stützfuß (20) hat im wesentlichen eine Y-Form mit dem Lager (21) an der Breitseite und trägt am unteren schmalen Ende eine geeignete Fußplatte (34).

Der Stützfuß (20) wird über den Stützenantrieb (12) betätigt, der in der gezeigten Ausführungsform als Spindelantrieb ausgebildet ist. Die Antriebsenergie wird einerseits über einen vorzugsweise elektrischen Antriebsmotor (13) und alternativ über eine Handkurbel (nicht dargestellt) mittels eines Anschlusses (25) aufgebracht. Die Antriebskonzeption wird nachfolgend näher erläutert.

Der Spindelantrieb (12) besitzt eine parallel zum Boden (4) sich erstreckende Spindel (11), die am vorderen Ende in einem am Boden (4) befestigten Spindelhalter (19) und am rückwärtigen Ende im fluchtend angeordneten elektromotorischen Stützenantrieb (12) gelagert ist. Der Stützenantrieb (12) ist seinerseits am rückwärtigen Ende über einen Gehäusefortsatz (24) am quer verlaufenden Stützengestell (18) gelagert. Der Stützenantrieb (12) ist in die Stütze (10) innenliegend integriert und benötigt weder zusätzlichen Bauraum, noch separate Befestigungsmöglichkeiten am Boden (4). Er ist außerdem bequem von außen zugänglich.

Auf der Spindel (11) ist eine Spindelmutter (16) geführt, die über eine an beiden Enden gelenkig gelagerte (21) zweiarmige Stützstange (22) mit dem Stützfuß (20) verbunden ist. Die Spindelmutter (16) ist an einer an der Bodenunterseite montierten Gleitschiene (17) gleitend geführt. Die Spindeldrehungen werden über die Spindelmutter (16) in eine translatorische Bewegung und mittels der Stützstange (22) in eine abwärts oder aufwärts gerichtete Schwenkbewegung des Stützfußes (20) umgelenkt.

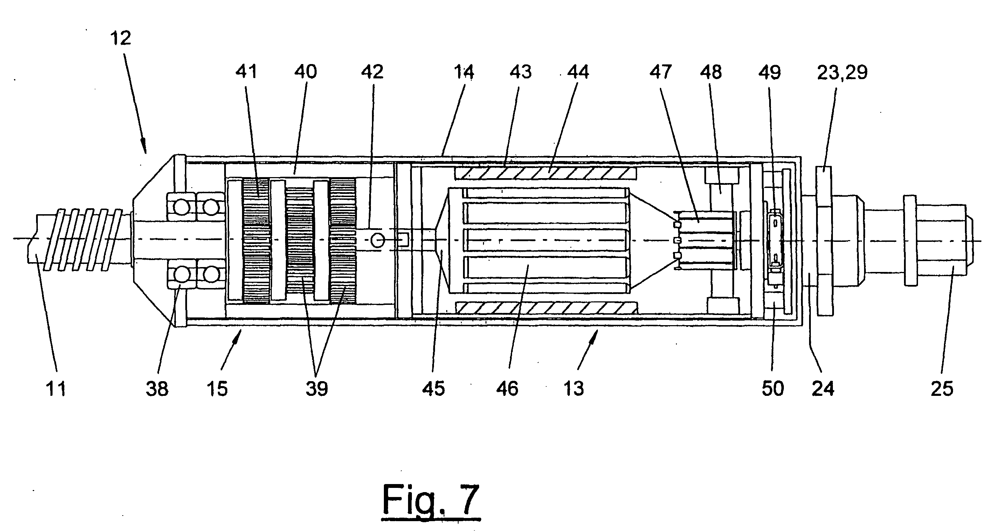

Der Stützenantrieb (12) besteht in der gezeigten Ausführungsform aus einem mit Niederspannung, z.B. nominal 12 Volt, betriebenen Elektromotor (13) mit einem angeflanschten Getriebe (15). Vorzugsweise handelt es sich um ein hochuntersetztes Getriebe (15), welches die hohe Motordrehzahl auf eine geringe Spindeldrehzahl reduziert und zugleich das Drehmoment erhöht. Als Getriebe (15) eignet sich besonders ein Planetengetriebe, welches zudem einen sehr geringen Platzbedarf hat. Figur 7 zeigt hierzu die Details. Alternativ können aber auch andere Getriebearten eingesetzt werden.

Der Elektromotor (13) und das Getriebe (15) sind vorzugsweise hintereinander in einem gemeinsamen Motorgehäuse (14) untergebracht. Die Spindel (11) ist mit dem Abtriebsrad des Getriebes (15), z.B. mit den abtriebsseitigen Planetenrädern (41) verbunden und drehbar im Motorgehäuse (14) über eine stirnseitigen Lagerflansch (38) mit Wälzlagern gelagert. Die Spindel (11) endet am Getriebe (15).

Das Planetengetriebe (15) kann ein oder mehrere Getriebestufen (39) beinhalten. Im vorliegenden Fall hat es drei hintereinander angeordnete Getriebestufen (39). Die Getriebestufen (39) können zur Änderung der Getriebeübersetzung austauschbar sein. Am Gehäuse (14) ist innenseitig mindestens ein Hohlrad (40) des Planetengetriebes (15) angeordnet, welches auf ein oder mehrere Getriebestufen (39) wirkt. In der gezeigten Ausführungsform kämmt es mit den Planetenrädern (41) der ersten und dritten Getriebestufe (39). Antriebsseitig ist das Planetengetriebe (15) mit seinem innen liegenden Sonnenrad (42) mit dem Elektromotor (13) und dessen Rotor (45) verbunden.

Der Elektromotor (13) ist als permanent erregter Gleichstrommotor ausgebildet. Er besitzt einen mit dem Gehäuse (14) verbundenen Stator (43) mit mehreren Permanentmagneten (44) sowie einen Rotor (45) mit ein oder mehreren Motorwicklungen (46). Die Stromzufuhr erfolgt über einen am Rotor (45) rückseitig angeschlossenen Kollektor (47) über Kohlebürsten (48). Diese sind mit einem Anschlussstecker (49) verbunden, an den die Leitungen (8) zur Steuerung (6) und Energieversorgung (7) angeschlossen sind. In der gezeigten Ausführungsform sind die Leitungen (8) lösbar angesteckt. Am Anschlussstecker (49) ist ein Kurzschlussschalter (50) angeordnet, der als Kippschalter ausgebildet ist und der bei einem Abzug der Leitungen (8) automatisch die Motorwicklung (46) kurzschließt.

Alternativ kann statt der Steckkontakte auch ein drehbarer Schleifringübertrager für den Anschluss der Leitungen (8) vorhanden sein. In diesem Fall bleiben die Leitungen (8) permanent angeschlossen. Der später näher erläuterte Kurzschluss der Motorwicklung für den Handbetrieb der Stützen (10) erfolgt dann in der Steuerung (6) über eine entsprechende Schaltung, die automatisch den Kurzschluss herstellt, wenn der Stützenantrieb (12) inaktiv ist.

Für den Handbetrieb der Spindeln (11) und zur manuellen Betätigung der Stützen (10) können die Elektromotoren (13) abgeschaltet werden. Die Stützeinrichtung (2) hat dann für jede Stütze (10) eine Einrichtung zur Abkoppelung oder zur Umkehr der motorischen Antriebsverbindung für den Handbetrieb. Hierdurch wird die kräftezehrende hemmende Wirkung des hochuntersetzenden Getriebes (15) und des Antriebsmotors (13) abgeschaltet bzw. überbrückt oder umgekehrt.

Das gezeigte Ausführungsbeispiel verdeutlicht die zweite Variante mit der Umkehr der motorischen Antriebsverbindung. Der Stützenantrieb (12) hat dabei eine abschaltbare Motorabstützung (23). Diese lässt sich zwischen einer Sperrstellung und einer Freigabestellung umschalten. Für den Motorbetrieb nimmt sie die Sperrstellung ein, wobei sie das Motormoment über das Gehäuse (14) in der nachfolgend näher beschriebenen Weise am Stützengestell (18) bzw. am Boden (4) abstützt. Die Freigabestellung ist für den Handbetrieb vorgesehen und ermöglicht eine manuelle Bedienung der Stütze (10).

Die abschaltbare Motorabstützung (23) beinhaltet einen rückwärtigen Gehäusefortsatz (24) des Motorgehäuses (14) und einen quer beweglichen Schieber (29) mit einer Schlüsselöffnung (31). Der Gehäusefortsatz (24) erstreckt sich nach hinten durch das abgewinkelte Stützengestell (18) und ist an diesem über ein Drehlager (26) gelagert. Am rückwärtigen Ende weist der Gehäusefortsatz (24) den als prismatischen Kurbelzapfen ausgebildeten Anschluss (25) für die Handkurbel auf. Eine Drehbewegung der Handkurbel wird damit in Umkehr der motorischen Antriebsverbindung in eine Drehbewegung des Motorgehäuses (14) und der Spindel (11) umgesetzt.

Der im wesentlichen zylindrische Gehäusefortsatz (24) greift durch die Schlüsselöffnung (31) des Schiebers (29) und hat in diesem Bereich zwei abgeflachte gegenüberliegende seitliche Schlüsselflächen (27), die mit der Schlüsselöffnung (31) unterschiedlich zusammenwirken. Der Schieber (29) ist einerseits in einem Schlitz (28) am Gehäusefortsatz (24) quer beweglich geführt und ist andererseits am Stützengestell (18) oder am Boden (4) relativ ortsfest gegenüber Drehbewegungen abgestützt (nicht dargestellt). Der Schieber (29) kann einen Griff (30) aufweisen, der seitlich über das Stützengestell (18) vorsteht und eine Schieberbetätigung ermöglicht.

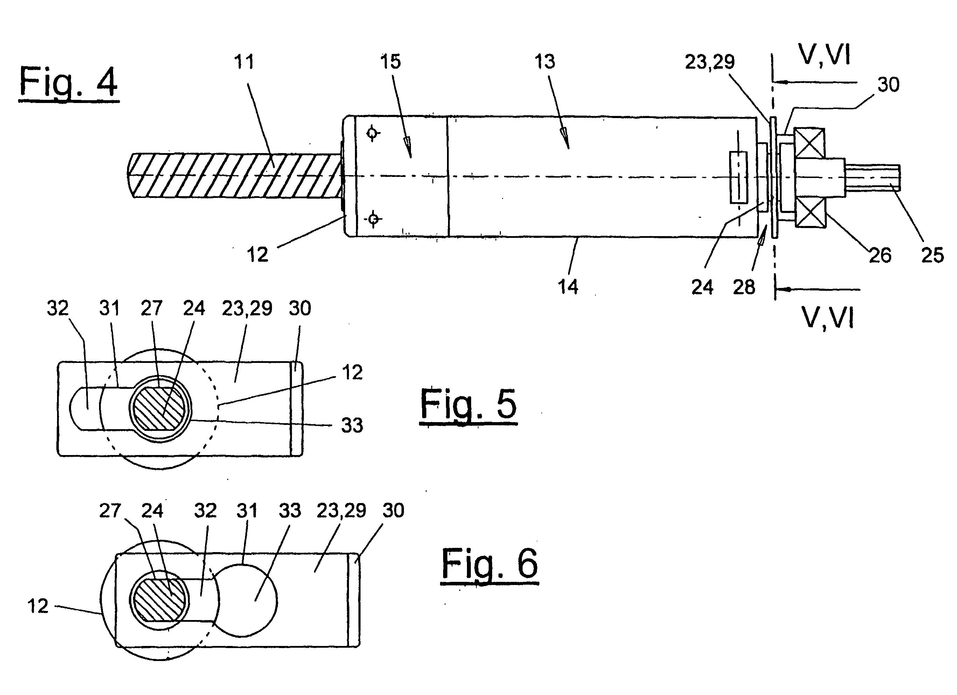

Über die Stellung des Schiebers (29) wird der Gehäusefortsatz (24) gesperrt oder freigegeben. Figur 5 zeigt die Freigabestellung und Figur 6 die Sperrstellung. Die Schlüsselöffnung (31) besitzt ein Langloch (32), dessen Breite geringfügig größer als die Breite des Gehäusefortsatzes (24) an den Schlüsselflächen (27) ist. Die Schlüsselöffnung (31) hat ferner noch eine vorzugsweise im wesentlichen kreisrunde Öffnung (33), die weiter als das Langloch (32) ist und deren Durchmesser etwas größer als der Maximaldurchmesser des Gehäusefortsatzes (24) ist.

In der Sperrstellung von Figur 6 ist der Schieber (29) soweit nach rechts gezogen, dass das Langloch (32) die Schlüsselflächen (27) des entsprechend gedrehten Gehäusefortsatzes (24) seitlich umgreift. Hierdurch ist das Motorgehäuse (14) mit seinem Gehäusefortsatz (24) drehfest am Schieber (29) abgestützt. In dieser Sperrstellung wirkt die Motorkraft über das Getriebe (15) auf die Spindel (11) und betätigt die Stütze (10) in der gewünschten Richtung auf oder ab.

Für den Handbetrieb der Stütze (10) wird der Schieber (29) nach links in die in Figur 5 gezeigte Freigabestellung bewegt. In dieser befindet sich der Gehäusefortsatz (24) im Bereich der erweiterten Öffnung (33) und kann sich behinderungsfrei in dieser drehen. In der Freigabestellung ist die Motorabstützung aufgehoben. Der Gehäusefortsatz (24) kann über den Kurbelzapfen (25) mit der Handkurbel gedreht werden, wobei sich das Motorgehäuse (14) mitdreht. Die Leitungen (8) können hierzu in der vorbeschriebenen Weise vom Motorgehäuse (14) abgesteckt werden oder sind über eine geeignete Dreh- oder Schleifringverbindung an den Elektromotor (13) angeschlossen.

Die Drehung des Gehäuses (14) mit der Handkurbel wird über das Getriebe (15) auf die Spindel (11) übertragen, die sich mitgedreht. Das Getriebe (15) wird hierbei blockiert, so dass die Handkraft und Drehbewegung in etwa mit einer 1:1-Übersetzung auf die Spindel (11) übertragen werden.

Bei der Drehung des Motorgehäuses (14) fungiert der Elektromotor (13) als Generator. Der mit dem Gehäuse (14) gedrehte Stator (43) wirkt mit seinen Permanentmagneten (44) über die elektromotorische Kraft auf den Rotor (45) mit seiner kurzgeschlossenen Motorwicklung (46) ein und dreht diesen mitsamt dem angeschlossenen Sonnenrad (42) mit. Zugleich dreht mit dem Gehäuse (14) das Hohlrad (40). Hierdurch wird das Planetengetriebe (15) derart blockiert, dass die Drehbewegung des Gehäuses (14) und des Hohlrads (40) über das mitdrehende Sonnenrad (42) in eine mitdrehende Bewegung der Planetenräder (41) und der Spindel (11) mit einer Übersetzung von etwa 1:1 umgesetzt wird. In diesem Fall wirkt das Getriebe (15) wie eine Kupplung.

In Abwandlung der gezeigten Ausführungsform kann die Stützeinrichtung (2) eine Einrichtung zur Abkoppelung der motorischen Antriebsverbindung für den Handbetrieb aufweisen. Hierfür ist beispielsweise der Antriebsmotor (13) über ein als Vorgelege ausgebildetes Untersetzungsgetriebe (15) mit der Spindel (11) verbunden. Die Spindel (11) trägt hier ähnlich wie beim Stand der Technik und der DE-U-298 15 373 am Ende einen prismatischen Zapfen als Anschluss für die Handkurbel. Die bei Handbetrieb hemmende Wirkung des Getriebes (15) und des Antriebsmotors (13) kann in diesem Fall durch eine Unterbrechung im Antriebsstrang behoben werden. Dies kann z. B. über eine ausrückbare Getriebestufe oder eine schaltbare Kupplung erfolgen. Hierbei können abweichend von der in Figur 1 bis 7 gezeigten Ausführungsform der Antriebsmotor (13) mit seinem Getriebe (15) seitlich versetzt neben der Spindel (11) angeordnet und eigenständig an der Stütze (10) gelagert sein. In einer weiteren Variante ist es möglich, die Spindel mit dem rückwärtigen Anschluss für die Handkurbel durch den Antriebsmotor und das Getriebe hindurchzuführen, wobei diese Teile als Hohlbauteile ausgebildet sind. In einer zusätzlichen Variante ist es möglich, eine abschaltbare Motorabstützung (23) in Verbindung mit einer durchgeführten Spindel (11) und einem dort angeordneten Anschluss oder Kurbelzapfen (25) vorzusehen. Bei der manuellen Spindeldrehung werden das Getriebe (15) und der Antriebsmotor (13) mitbewegt, wobei durch die abschaltbare Motorabstützung (23) auch das Gehäuse (15) frei mitdrehen kann und bei einer kurzgeschlossenen Motorwicklung (46) vom drehenden Rotor (45) mitgenommen wird. Das Getriebe (15) hat in diesem Fall keine Selbsthemmung und kann von der Spindel (11) gedreht werden. Die für den Handbetrieb erforderlichen Handkräfte sind dabei ebenfalls deutlich geringer als beim Stand der Technik.

Weitere Abwandlungen der gezeigten Ausführungsform sind in verschiedener Weise möglich. Zum einen können die konstruktive Ausbildung der Stütze (10) und des Stützfußes (20) beliebig variieren. Ferner kann auch der Stützenantrieb (12) mit seinem Antriebsmotor (13) in beliebig geeigneter Weise ausgebildet sein. Statt eines Elektromotors können auch andere geeignete Motoren eingesetzt werden. Anstelle eines Schiebers (29) kann auch eine beliebig andere geeignete Konstruktion zur schaltbaren Motorabstützung (23) eingesetzt werden.

### BEZUGSZEICHENLISTE

- 1: Fahrzeug, Fahrzeuganhänger
- 2: Stützeinrichtung
- 3: Deichsel
- 4: Boden
- 5: Rad
- 6: Steuerung
- 7: Energieversorgung, Batterie
- 8: Leitung
- 9: Fernbedienung
- 10: Stütze
- 11: Spindel
- 12: Stützenantrieb, Spindelantrieb
- 13: Antriebsmotor, Elektromotor
- 14: Motorgehäuse
- 15: Getriebe, mehrstufiges Planetengetriebe
- 16: Spindelmutter
- 17: Gleitschiene
- 18: Stützengestell
- 19: Spindelhalter
- 20: Stützfuß
- 21: Lager
- 22: Stützstange
- 23: abschaltbare Motorabstützung
- 24: Gehäusefortsatz
- 25: Anschluss für Handantrieb, Kurbelzapfen
- 26: Lager
- 27: Schlüsselfläche, Abflachung
- 28: Führung, Schlitz
- 29: Schieber
- 30: Griff
- 31: Schlüsselöffnung
- 32: Langloch
- 33: erweiterte Öffnung
- 34: Fußplatte
- 35: elektronische Wasserwaage
- 36: Anzeige
- 37: Warneinrichtung
- 38: Lagerflansch
- 39: Getriebestufe
- 40: Hohlrad
- 41: Planetenräder
- 42: Sonnenrad
- 43: Stator
- 44: Permanentmagnet
- 45: Rotor
- 46: Motorwicklung
- 47: Kollektor
- 48: Kohlebürsten
- 49: Anschlussstecker
- 50: Kurzschlussschalter

## Patentansprüche

1. Stützeinrichtung für Fahrzeuge, insbesondere für Fahrzeuganhänger, mit mindestens einer beweglichen Stütze (10), die mit einem Antriebselement (11) und mit einem motorischen Stützenantrieb (12) ausgerüstet ist, welcher einen Antriebsmotor (13) und ein Getriebe (15) besitzt, wobei die Stütze (10) einen Anschluss (25) für einen manuellen Antrieb aufweist, **dadurch gekennzeichnet, dass** der motorische Stützenantrieb (12) ein untersetzendes Getriebe (15) besitzt und eine mechanische Einrichtung zur Abkopplung oder zur Umkehr der motorischen Antriebsverbindung für den Handbetrieb und für die manuelle Betätigung der Stütze (10) über den Anschluss (25) bei abgeschaltetem Antriebsmotor (13) aufweist.

2. Stützeinrichtung nach Anspruch 1, **dadurch gekennzeichnet, dass** die Einrichtung zur Abkopplung der motorischen Antriebsverbindung eine Unterbrechung im Antriebsstrang, vorzugsweise eine ausrückbare Kupplung oder Getriebestufe aufweist.

3. Stützeinrichtung nach Anspruch 1, **dadurch gekennzeichnet, dass** die Einrichtung zur Umkehr der motorischen Antriebsverbindung eine abschaltbare Motorabstützung (23) für den Antriebsmotor (13) aufweist.

4. Stützeinrichtung nach Anspruch 1 oder 3, **dadurch gekennzeichnet, dass** der Anschluss (25) für den manuellen Antrieb am Motorgehäuse (14) angeordnet ist, wobei das Motorgehäuse (14) über das Getriebe (15) mit dem Antriebselement (11) verbunden ist.

5. Stützeinrichtung nach Anspruch 1, 2, 3 oder 4, **dadurch gekennzeichnet, dass** der Stützenantrieb (12) als Spindelantrieb ausgebildet ist.

6. Stützeinrichtung nach einem der vorhergehenden Ansprüche, **dadurch gekennzeichnet, dass** der Stützenantrieb (12) einen Elektromotor (13) aufweist, der als Niederspannungsmotor ausgebildet ist, wobei das Getriebe (15) eine hohe Untersetzung aufweist und vorzugsweise als Planentengetriebe ausgebildet ist.

7. Stützeinrichtung nach einem der vorhergehenden Ansprüche, **dadurch gekennzeichnet, dass** der Elektromotor (13) und das Getriebe (15) hintereinander in einem gemeinsamen Gehäuse (14) angeordnet sind.

8. Stützeinrichtung nach einem der vorhergehenden Ansprüche, **dadurch gekennzeichnet, dass** der Stützenantrieb (12) in die Stütze (10) innenliegend integriert ist.

9. Stützeinrichtung nach einem der vorhergehenden Ansprüche, **dadurch gekennzeichnet, dass** die abschaltbare Motorabstützung (23) einen endseitig am Motorgehäuse (14) vorstehenden Gehäusefortsatz (24) mit dem Anschluss (25) für den Handantrieb und einem geführten (28) und relativ ortsfest abgestützten Schieber (29) mit einer Schlüsselöffnung (31) aufweist, durch welche der stangenförmig ausgebildete und mit mindestens einer Schlüsselfläche (27) versehene Gehäusefortsatz (24) greift.

10. Stützeinrichtung nach einem der vorhergehenden Ansprüche, **dadurch gekennzeichnet, dass** der Gehäusefortsatz (24) an einem Stützengestell (18) gelagert (26) ist.

11. Stützeinrichtung nach einem der vorhergehenden Ansprüche, **dadurch gekennzeichnet, dass** die Spindel (11) an einem Spindelhalter (19) und im Getriebe (15) gelagert ist.

12. Stützeinrichtung nach einem der vorhergehenden Ansprüche, **dadurch gekennzeichnet, dass** die Spindel (11) mit den abtriebsseitigen Planetenrädern (41), der Rotor (45) des Antriebsmotors (13) mit dem Sonnenrad (42) und das Gehäuse (14) mit dem Hohlrad (40) des Planetengetriebes (15) verbunden sind.

13. Stützeinrichtung- nach einem der vorhergehenden Ansprüche, **dadurch gekennzeichnet, dass** der Elektromotor (13) als permanenterregter Gleichstrommotor ausgebildet ist und einen mit dem Gehäuse (14) verbundenen Stator (43) mit Permanentmagneten (44) sowie einen Rotor (45) mit einer Motorwicklung (46) aufweist.

14. Stützeinrichtung nach einem der vorhergehenden Ansprüche, **dadurch gekennzeichnet, dass** die Motorwicklung (46) im Handbetrieb über einen Kurzschlussschalter (50) am Anschlussstecker (49) bei unterbrochener Stromversorgung oder über eine Schaltung in einer angeschlossenen Steuerung (6) bei aufrechterhaltener mitdrehender Stromversorgung kurzgeschlossen ist.

15. Stützeinrichtung nach einem der vorhergehenden Ansprüche, **dadurch gekennzeichnet, dass** die Stütze (10) einen am Stützengestell (18) gelenkig gelagerten Stützfuß (20) und eine am Stützfuß (20) und einer Spindelmutter (16) gelenkig gelagerte (21) Stützstange (22) aufweist.

16. Stützeinrichtung nach einem der vorhergehenden Ansprüche, **dadurch gekennzeichnet, dass** die Stützeinrichtung (1) als Nivelliereinrichtung ausgebildet ist und mehrere Stützen (10) mit motorischen Stützenantrieben (12) aufweist, die mit einer gemeinsamen Steuerung (6) mit mindestens einer elektronischen Wasserwaage (35) verbunden sind.

17. Stützeinrichtung nach einem der vorhergehenden Ansprüche, **dadurch gekennzeichnet, dass** die Stützeinrichtung (1) eine Fernbedienung (9) aufweist.

18. Stützeinrichtung nach einem der vorhergehenden Ansprüche, **dadurch gekennzeichnet, dass** die Fernbedienung (9) mindestens eine Anzeige (36) für die Fahrzeuglage aufweist.

19. Stützeinrichtung nach einem der vorhergehenden Ansprüche, **dadurch gekennzeichnet, dass** die Fernbedienung (9) mindestens eine Warneinrichtung (37) aufweist, die die Funktion der Stützenantriebe (12) und/oder ein Nichterreichen der gewünschten Fahrzeuglage signalisiert.

## Claims

1. Supporting device for vehicles, in particular for vehicle trailers, with at least one moveable support (10) which is equipped with a drive element (11) and with a motive support drive (12) which possesses a drive motor (13) and a gear (15), the support (10) having a connection (25) for a manual drive, **characterized in that** the motive support drive (12) possesses a reduction gear (15) and has a mechanical device for uncoupling or for reversing the motive drive connection for hand operation and for the manual actuation of the support (10) via the connection (25), with the drive motor (13) switched off.

2. Supporting device according to Claim 1, **characterized in that** the device for uncoupling the motive drive connection has an interruption in the drive train, preferably a disengageable clutch or gear step.

3. Supporting device according to Claim 1, **characterized in that** the device for reversing the motive drive connection has a disconnectable motor supporting means (23) for the drive motor (13).

4. Supporting device according to Claim 1 or 3, **characterized in that** the connection (25) for the manual drive is arranged on the motor housing (14), the motor housing (14) being connected to the drive element (11) via the gear (15).

5. Supporting device according to Claim 1, 2, 3 or 4, **characterized in that** the support drive (12) is designed as a spindle drive.

6. Supporting device according to one of the preceding claims, **characterized in that** the support drive (12) has an electric motor (13) which is designed as a low-voltage motor, the gear (15) having a high reduction and being designed preferably as an epicyclic gear.

7. Supporting device according to one of the preceding claims, **characterized in that** the electric motor (13) and the gear (15) are arranged one behind the other in a common housing (14).

8. Supporting device according to one of the preceding claims, **characterized in that** the support drive (12) is integrated internally into the support (10).

9. Supporting device according to one of the preceding claims, **characterized in that** the disconnectable motor supporting means (23) has a housing extension (24) projecting on the motor housing (14) on the end face, with a connection (25) for the hand drive and with a guided slide (28) and a relatively fixedly supported slide (29) having a key orifice (31), through which engages the housing extension (24) having a rod-shaped design and provided with at least one key face (27).

10. Supporting device according to one of the preceding claims, **characterized in that** the housing extension (24) is mounted (26) on a support frame (18).

11. Supporting device according to one of the preceding claims, **characterized in that** the spindle (11) is mounted on a spindle holder (19) and in the gear (15).

12. Supporting device according to one of the preceding claims, **characterized in that** the spindle (11) is connected to the output-side planet wheels (41), the rotor (45) of the drive motor (13) is connected to the sun wheel (42) and the housing (14) is connected to the ring wheel (40) of the epicyclic gear (15).

13. Supporting device according to one of the preceding claims, **characterized in that** the electric motor (13) is designed as a permanently excited direct-current motor and has a stator (43) connected to the housing (14), with permanent magnets (44), and a rotor (45) with a motor winding (46).

14. Supporting device according to one of the preceding claims, **characterized in that** the motor winding (46) is short-circuited in hand operation via a short-circuit switch (50) on the connecting plug (49), with the current supply interrupted, or via a circuit in a connected control (6), with corotating current supply being maintained.

15. Supporting device according to one of the preceding claims, **characterized in that** the support (10) has a supporting foot (20) mounted in an articulated manner on the support frame (18) and a supporting rod (22) mounted (21) in an articulated manner on the supporting foot (20) and on a spindle nut (16).

16. Supporting device according to one of the preceding claims, **characterized in that** the supporting device (1) is designed as a levelling device and has a plurality of supports (10) with motive support drives (12) which are connected to a common control (6) having at least one electronic spirit level (35).

17. Supporting device according to one of the preceding claims, **characterized in that** the supporting device (1) has remote operation (9).

18. Supporting device according to one of the preceding claims, **characterized in that** the remote operation (9) has at least one indicator (36) for the vehicle position.

19. Supporting device according to one of the preceding claims, **characterized in that** the remote operation (9) has at least one warning device (37) which signals the functioning of the support drives (12) and/or that the desired vehicle position is not reached.

## Revendications

1. Dispositif d'appui pour véhicules, notamment pour remorques de véhicules, comprenant au moins un support mobile (10) qui est muni d'un élément d'entraînement (11) et d'un entraînement de support motorisé (12) qui possède un moteur d'entraînement (13) et un engrenage (15), le support (10) présentant une connexion (25) pour un entraînement manuel, **caractérisé en ce que** l'entraînement de support motorisé (12) possède un démultiplicateur (15) et présente un dispositif mécanique pour le désaccouplement ou pour l'inversion de la connexion d'entraînement motorisée pour le fonctionnement manuel et pour l'actionnement manuel du support (10) par le biais de la connexion (25) lorsque le moteur d'entraînement (13) est désactivé.

2. Dispositif d'appui selon la revendication 1, **caractérisé en ce que** le dispositif pour le désaccouplement de la connexion d'entraînement motorisée présente une interruption de la transmission, de préférence un embrayage débrayable ou un étage de transmission.

3. Dispositif d'appui selon la revendication 1, **caractérisé en ce que** le dispositif pour l'inversion de la connexion d'entraînement motorisée présente un support de moteur désactivable (23) pour le moteur d'entraînement (13).

4. Dispositif d'appui selon la revendication 1 ou 3, **caractérisé en ce que** la connexion (25) pour l'entraînement manuel est disposée sur le carter moteur (14), le carter moteur (14) étant connecté à l'élément d'entraînement (11) par le biais de l'engrenage (15).

5. Dispositif d'appui selon la revendication 1, 2, 3 ou 4, **caractérisé en ce que** l'entraînement de support (12) est réalisé sous forme d'entraînement de broche.

6. Dispositif d'appui selon l'une quelconque des revendications précédentes, **caractérisé en ce que** l'entraînement de support (12) présente un moteur électrique (13) qui est réalisé sous la forme d'un moteur à faible tension, l'engrenage (15) présentant une forte démultiplication et étant réalisé de préférence sous la forme d'un engrenage planétaire.

7. Dispositif d'appui selon l'une quelconque des revendications précédentes, **caractérisé en ce que** le moteur électrique (13) et l'engrenage (15) sont disposés l'un derrière l'autre dans un carter commun (14).

8. Dispositif d'appui selon l'une quelconque des revendications précédentes, **caractérisé en ce que** l'entraînement de support (12) est intégré à l'intérieur du support (10).

9. Dispositif d'appui selon l'une quelconque des revendications précédentes, **caractérisé en ce que** le support de moteur désactivable (23) présente une saillie de carter (24) saillant sur le carter moteur (14) du côté de l'extrémité avec la connexion (25) pour l'entraînement manuel et avec un coulisseau (29) supporté de manière relativement fixe en position et guidé (28), avec une ouverture de clé (31) à travers laquelle vient en prise la saillie de carter (24) réalisée en forme de tige et pourvue d'au moins une surface de clé (27).

10. Dispositif d'appui selon l'une quelconque des revendications précédentes, **caractérisé en ce que** la saillie de carter (24) est montée (26) sur un bâti de support (18).

11. Dispositif d'appui selon l'une quelconque des revendications précédentes, **caractérisé en ce que** la broche (11) est montée sur un porte-broche (19) et dans l'engrenage (15).

12. Dispositif d'appui selon l'une quelconque des revendications précédentes, **caractérisé en ce que** la broche (11) est connectée aux roues planétaires (41) du côté de la sortie, le rotor (45) du moteur d'entraînement (13) est connecté à la roue solaire (42) et le carter (14) est connecté à la couronne (40) de l'engrenage planétaire (15).

13. Dispositif d'appui selon l'une quelconque des revendications précédentes, **caractérisé en ce que** le moteur électrique (13) est réalisé sous la forme d'un moteur à courant continu excité par aimant permanent et présente un stator (43) connecté au carter (14) avec des aimants permanents (44), ainsi qu'un rotor (45) avec un enroulement de moteur (46).

14. Dispositif d'appui selon l'une quelconque des revendications précédentes, **caractérisé en ce que** l'enroulement de moteur (46), lors du fonctionnement manuel, est mis en court-circuit par le biais d'un commutateur de court-circuit (50) sur la fiche de connexion (49) en cas d'interruption de l'alimentation électrique, ou par le biais d'un branchement dans une commande raccordée (6) dans le cas d'une alimentation électrique tournant et maintenue.

15. Dispositif d'appui selon l'une quelconque des revendications précédentes, **caractérisé en ce que** le support (10) présente une base de support (20) montée de manière articulée sur le bâti de support (18), et une tige de support (22) montée de manière articulée (21) sur la base de support (20) et sur un écrou de broche (16).

16. Dispositif d'appui selon l'une quelconque des revendications précédentes, **caractérisé en ce que** le dispositif d'appui (1) est réalisé sous la forme d'un dispositif de mise à niveau et présente plusieurs supports (10) avec des entraînements de support motorisés (12) qui sont connectés à une commande commune (6) avec au moins un niveau à bulle électronique (35).

17. Dispositif d'appui selon l'une quelconque des revendications précédentes, **caractérisé en ce que** le dispositif d'appui (1) présente une commande à distance (9).

18. Dispositif d'appui selon l'une quelconque des revendications précédentes, **caractérisé en ce que** la commande à distance (9) présente au moins un affichage (36) de la position du véhicule.

19. Dispositif d'appui selon l'une quelconque des revendications précédentes, **caractérisé en ce que** la commande à distance (9) présente au moins un dispositif d'avertissement (37), qui signale le fonctionnement des entraînements de support (12) et/ou qui signale que la position souhaitée du véhicule n'est pas atteinte.
